(19) Europäisches Patentamt

European Patent Office

Office européen des brevets

(11) **EP 0 654 943 B1**

(12) **EUROPEAN PATENT SPECIFICATION**

(45) Date of publication and mention
of the grant of the patent:
**22.03.2000 Bulletin 2000/12**

(51) Int. Cl.⁷: **H04N 5/20**

(21) Application number: **94308625.6**

(22) Date of filing: **23.11.1994**

(54) **Image enhancement method and circuit**

Verfahren und Schaltung zur Bildverbesserung

Procédé et circuit d'amélioration d'image

(84) Designated Contracting States:
**DE FR GB**

(30) Priority: **24.11.1993 KR 9325127**

(43) Date of publication of application:
**24.05.1995 Bulletin 1995/21**

(73) Proprietor:
**SAMSUNG ELECTRONICS CO., LTD.
Suwon-city, Kyungki-do 441-373 (KR)**

(72) Inventor:
**Lee, Myeong-hwan,
104-712, Wonchon Jukong APT.
Suwon City, Kyungki-do (KR)**

(74) Representative:
**Neill, Alastair William et al
Appleyard
Lees & Co.
15 Clare Road
Halifax West Yorkshire HX1 2HY (GB)**

(56) References cited:
**EP-A- 0 560 056          GB-A- 2 256 990
US-A- 4 489 349**

## Description

The present invention relates to a method and circuit for controlling the brightness and contrast of a video signal, and more particularly relates to a method and circuit in which the brightness and contrast of a video signal is adaptively controlled according to the average brightness level of a picture.

Natural illumination can have an extremely wide brightness range, and will have a vast range of contrast scales. The human eye adapts itself remarkably well for viewing naturally-lit objects and can easily perceive detail in shadows. Nevertheless, cameras or televisions are not easily adaptable to conditions of natural illumination. Colour cameras can be responsive to input light having a specific illumination range, but an electric output signal of the camera is limited to a range of, for example, 1 volt peak-to-peak. A conventional display apparatus often displays a poor, undesirable quality picture because its contrast range is extremely narrow.

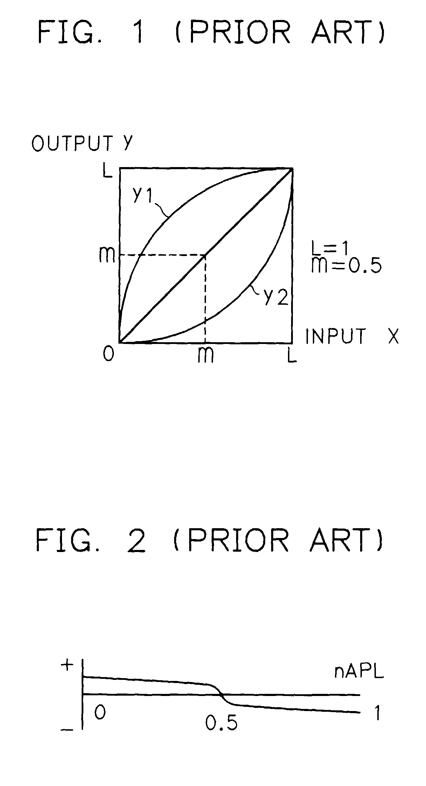

To solve such a problem, US 4,152,720 and US 4,489,349 provide a "Contrast correction arrangement" and a "Video brightness control circuit" respectively. These Patents disclose methods for controlling contrast according to brightness adjustment. In the contrast correction apparatus of U.S. Patent No. 4,152,720, relative contrast enhancement is achieved by adjusting video signal input-output characteristics differently according to a user's externally applied control values for the camera. Figure 1 is a graph showing input-output characteristics used in a conventional contrast correction apparatus, which shows two characteristic curves y1 and y2 expressed as $y1(x)=pow(x,0.5)$ and $y2(x)=pow(x,2)$, where $pow(x,2)=x^2$. The prior art relating to Figure 1 improves the contrast based on the brightness control, and the contrast enhancement is, in fact, partially accomplished just as an additional effect of the brightness control. Thus, there is a problem of a manual operation.

The "Video brightness control circuit" of U.S. Patent No. 4,489,349, controls the input-output characteristic according to the average picture (brightness) level (APL) of a video input signal, such as previously described for US 4,152,720. However, adaptive operation according to the APL is different to that previously described whilst achieving a similar effect. Figure 2 shows the input-output characteristic of U.S. Patent No. 4,489,349, and the input-output characteristic will be given as

$$OUT = [nAPL \times y2(x)] + [(1-nAPL) \times y1(x)]$$

where, the nAPL is a normalized average brightness level, i.e., the average brightness level of a video input signal, and yl(x) and y2(x) are input-output characteristic curves as shown in Figure 1. The relationship expresses the output OUT in which y1(x) and y2(x) are weighted to nAPL and 1-nAPL. For example, when the nAPL is 0.3, the output OUT becomes $[0.3 \times y2(x)]+[0.7 \times y1(x)]$, and when the nAPL is 0.7, the output OUT becomes $[0.7 \times y2(x)]+[0.3 \times y1(x)]$. Accordingly, in the case that nAPL has a low value, such as 0.3, the total value of the APL is increased by giving the first characteristic curve y1 a higher weight, whereas in the case that nAPL is 0.7, the total value of the APL is decreased by giving the second characteristic curve y2 a higher weight.

In Figure 2, variations are moved into the positive direction when the nAPL is less than 0.5, and they are moved into the negative direction when the nAPL is larger than 0.5, thereby the variation is added to an original signal. The closer the nAPL is to 0 or 1, the more the average picture level of the video input signal is varied, whereas the average brightness level is varied only a little when the nAPL is around 0.5. This technique also controls the contrast using the average picture level relative to the brightness of pictures, but has a drawback that contrast efficiency drops due to making much of brightness process. Therefore, there is a disadvantage that an extremely dark picture, such as night scenery, provides a poor, undesirable picture due to brightness extension.

Therefore, with a view to solving or reducing the above problems, preferred embodiments of the present invention aim to provide an image enhancement method adaptive to a scene which divides the range of an average picture level in a video input signal into a plurality of areas, sets an individually different input-output characteristic to each of the divided areas, and controls the brightness and contrast of the video input signal according to the input-output characteristic of an area corresponding to the average brightness level of a video input signal, thereby obtaining a picture with more advanced contrast than the conventional technique.

According to the present invention, there is provided an image enhancement method adaptive to a scene which controls brightness and contrast of an input video signal using a normalized average brightness level, the method comprising the steps: dividing the range of the normalized average brightness level in a video input signal into a plurality of areas according to efficiency of contrast enhancement, the areas being composed of a first area in which the average brightness level corresponds to a dark scene, a second area of an intermediate average brightness level, a third area with an average brightness level between that of said first and second areas and a fourth area with an average brightness level above that of said second area; setting an individually different brightness correction characteristic to each of said divided areas, said first area having a normalized average brightness level around "0" and said second area having a normalized average brightness level at or near "0.5"; calculating the normalized average brightness level during a predetermined period with respect to a given particular video input signal; and controlling the brightness and contrast of the video input signal according to the brightness correction characteristic corresponding to said calculated normalized average brightness level, the method being characterised in that in said second area, where the normalized average brightness level is at or near 0.5, the level "x" of the video input signal is corrected using a correction characteristic Y3(x) where: $Y3(x)=f(x^2)$ for values of input video signal where the normalized video input signal level is less than 0.5, and where $Y3(x)=g(x^{0.5})$ where the normalized video input signal level is greater than 0.5.

Preferably, in said brightness and contrast controlling step the video input signal is output as it is, when the calculated normalized average brightness level is within said first area.

The correction characteristic Y3(x) may be weighted and corrected for the production of a corrected and weighted video signal in which the level "x" of the video input signal is corrected according to the expression OUT for contrast enhancement:

$$OUT=amp \times abs[m-abs(nAPL-m)] \times Y3(x)$$

where amp is an amplification ratio, abs is an absolute value, nAPL is a normalized average brightness level value, and m is a constant.

When the normalized average brightness level is in the second area, the correction characteristic Y3(x) may comprise two components, $Y3_L(x)$ and $Y3_H(x)$, $Y3_L(x)$ being the correction characteristic $Y3(x)=f(x^2)$ which is applied to the input video signal when the normalized video input signal level is below 0.5 and $Y3_H(x)$ being the correction characteristic $Y3(x)=g(x^{0.5})$ which is applied when the normalized video input signal level is above 0.5, these two components further being weighted and corrected for the production of a corrected and weighted video signal in which the level "x" of the video input signal is corrected according to the following expressions $OUT_L$ and $OUT_H$ for contrast enhancement:

$$OUT_L=amp1 \times abs(m-abs(m-nAPL)) \times Y3_L(x);$$

$$OUT_H=amp2 \times abs(m-abs(nAPL-m)) \times Y3_H(x);$$

where each of $OUT_L$ and $OUT_H$ is a corrected and weighted video signal, m is a constant, abs is an absolute value and, nAPL is the normalized average brightness level.

The constant "m" is preferably 0.5.

Said brightness and contrast controlling step preferably comprises the step of correcting said level of the video input signal level x by the following expression for contrast enhancement, in the case that the calculated normalized average brightness level is within said third area:

$$OUT=abs((p-q)/p) \times y1(x), where\ y1(x)=\sqrt{x}$$

$$p=a\_area\text{-}period/2,\ q=abs(a\_area\_center-nAPL)$$

where OUT is the corrected and weighted video signal, abs is the absolute value, "a_area-period" represents the interval of the third area, "a_area_center" is the central value of the third area, and nAPL is the normalized average brightness level value.

Preferably, said brightness and contrast controlling step comprises the step of correcting said level of the video input signal by the following expression for contrast enhancement, in the case that the calculated normalized average brightness level is within said third area:

$$OUT=(0.5-nAPL) \times y1(x),$$

where $y1(x)=\sqrt{x}$, said OUT is the corrected and weighted video signal, and nAPL is the normalized average brightness level value.

Said brightness and contrast controlling step preferably comprises the step of correcting the video input signal level x by the following expression for contrast enhancement, in the case that the calculated normalized average brightness level is within said fourth area:

$$OUT=amp \times abs(nAPL-m) \times y2(x),$$

where $y2(x)=x^2$, said OUT is the corrected and weighted video signal, m is commonly 0.5, amp is an amplification ratio, abs is an absolute value, and nAPL is the normalized average brightness level value.

The invention extends to an image enhancement circuit adaptive to a scene which controls and outputs the brightness and contrast of a video signal using an average brightness level, the circuit being arranged to operate in accordance with the method of the invention and the circuit comprising: calculating means for calculating the average brightness level during a predetermined period with respect to a video signal to be input through an input terminal; and controlling means for controlling the brightness and contrast of the video input signal according to brightness correction characteristics corresponding to said calculated average brightness level, in which the range of said average brightness level in said video input signal is divided into said plurality of areas, and a plurality of input-output characteristic curves are provided so that the brightness and contrast of said video input signal is differently corrected for respective areas.

Said brightness and contrast controlling means preferably stores each of brightness correction characteristics corresponding to said average brightness level in the format of a look-up table which is composed of a video output signal corresponding to a video input signal.

Said brightness and contrast controlling means preferably corrects the brightness and contrast of a video signal to be input following the video input signal which is used in calculating of the average brightness level.

The image enhancement circuit may further comprise a delay unit, located before said brightness and contrast controlling means, for delaying and outputting the video input signal supplied through an input so that the brightness and contrast of the video input signal used in calculating of the average brightness level can be controlled.

The circuit may comprise an amplifier which amplifies said video input signal with an amplification ratio which is varied according to the average brightness level calculated by said average brightness level calculating means, and outputs the amplified signal to said brightness and contrast controlling means.

Preferably, said amplifier amplifies said video input signal so that the slope of an input-output characteristic curve becomes low, in the case that the calculated value of said average brightness level is near "1", while it amplifies said video input signal so that the slope of an input-output characteristic curve becomes high, in the case that the calculated value of said average brightness level is close to "0".

Said average brightness level calculating means preferably comprises a low-pass filter for counting the value of the average brightness level by passing through only low components of the video input signal, and then for outputting a corresponding voltage; and a decoder for outputting a control signal to control said brightness and contrast controlling means according to said voltage supplied from said low-pass filter.

For a better understanding of the invention, and to show how embodiments of the same may be carried into effect, reference will now be made, by way of example, to the accompanying diagrammatic drawings, in which:

Figure 3 is a graph showing input-output characteristics used in accordance with embodiments of the present invention;

Figure 4 is a graph showing brightness correction characteristics of an image enhancement circuit in accordance with embodiments of the present invention;

Figure 5 is a block diagram for illustrating a first embodiment of an image enhancement circuit;

Figure 6 is a block diagram for illustrating a second embodiment of an image enhancement circuit;

Figure 7 is a graph showing input-output characteristic curves of an amplifier of Figure 6; and

Figure 8 is a block diagram for illustrating a third embodiment of an image enhancement circuit.

Preferred embodiments of the present invention will be described below in more detail with reference to the accompanying drawings.

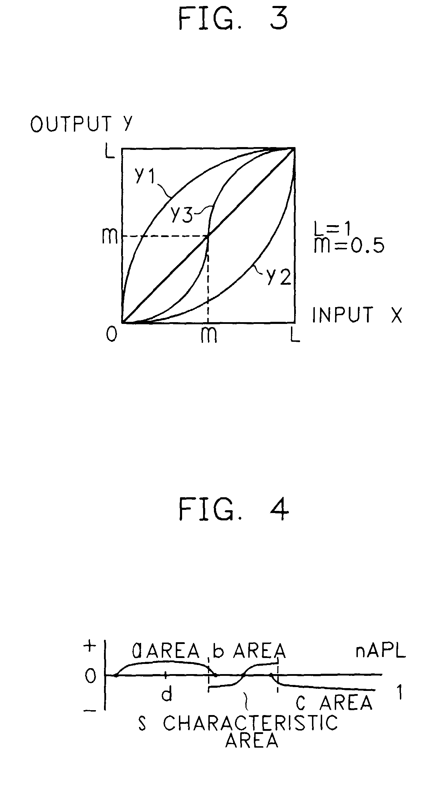

Figure 3 is a graph showing input-output characteristics used in the present invention. In Figure 3, two curves y1, y2 are the same as the input-output characteristic curves of Figure 1, and an S-shaped curve represents an input-output characteristic curve added so as to adjust brightness and contrast using an average picture level. The first characteristic curve y1 causes a large increase in brightness of the input signal and a relative contrast enhancement effect of low level values. The second characteristic curve y2 results in large decrease in brightness of the input signal and a relative contrast enhancement effect of high level values. The third characteristic curve y3 effects large increase in contrast.

Figure 4 shows a graph illustrating the correction characteristic of brightness and contrast in the image enhancement method in accordance with the present invention. The characteristic curve of Figure 4 illustrates that contrast adjustment using the input-output characteristic curves y1, y2 and y3 is performed at the respective divided areas on the nAPL. The invention divides the range of the average picture level in the video input signal into four areas, and allows for each area a respective brightness correction characteristic which is determined by the nAPL of the video input signal, input-output characteristic curves of Figure 3 and applies differently weighted values peculiar to each area.

The video input signal is adjusted in brightness and contrast by the brightness correction characteristics. As a result, a video signal with enhanced contrast is obtained. The input-output correction characteristic curves for an embodiment of the present invention will be expressed as:

$$Y1(x)=x^{0.5} \qquad Y2(x)=x^2$$

$$Y3_L(x_L)=x_L^2 \qquad Y3_H(x_H)=x_H^{0.5}$$

where, according to Fig. 3, $x_L$, $x_H$, $y_L$ and $y_H$ are related to x and y by

$$x=m+(L-m) \cdot x_H = m \cdot x_L$$

$$y=m+(L-m) \cdot y_H = m \cdot y_L \text{ and}$$

where $Y3_L(x_L)$ corresponds to a correction characteristic curve referred to generally as Y3(x) but being of specific application to correct input video signals x when the nAPL is in the "b"-area and the input video signal is less than 0.5 and $Y3_H(x_H)$ corresponds to the correction characteristic applied when the input video signal is greater than 0.5, $x_L$ corresponds to values of video input signal x where the nAPL is within the "b" area of Figure 4 (as will be discussed below) and the input video signal x is in the range of 0~0.5 and $x_H$ corresponds to values of video input signal x where the nAPL is also within the "b" area but the input video signal x is above 0.5. In the above equations it is not necessary to limit exponents' values to 0.5 or 2, and an exponential value can be substituted by other values, if necessary.

As shown in Figure 4, the present invention may be divided into four areas. Boundaries of these areas can be properly selected according to the brightness and contrast correction. From Figure 4, it will be understood that an area exists having an nAPL smaller than that corresponding to an area "a". An explanation concerning the input-output characteristic curves which are employed in the contrast enhancement of each area will be given as follows. For brightness and contrast corrections, when the nAPL value is within area "a", the first correction characteristic curve y1 is selected. When the nAPL value is within an area "b" the third correction characteristic curve y3 is selected, and when the nAPL value is within an area "c" the second correction characteristic curve y2 is selected.

Using the input-output correction characteristic curves of Figure 3, further expressions will be described for use in the contrast adjustment according to areas as shown in Figure 4. The area where the nAPL is smaller than that of the "a" area corresponds to the darkest portion of a picture. In this area, the level of an input signal is equal to that of an output signal. Thus, the brightness of the input and output signals is the same to prevent undesirable pictures.

For example, the output signal OUT of the "a" area uses the correction characteristic Y1(x) as defined above, but weighted according to the particular nAPL value within that area "a" as given by the following expression (1):

$$OUT=|(p-q)/p| \times y1(x) \tag{1}$$

where, p is defined as (the interval of the "a" area)/2, and q is |the central value of the "a" area-nAPL|. The central value of the "a" area may be expressed as "d" in Figure 4. The above expression (1) shows that a weighted value of the first characteristic curve y1 is determined by a half of the "a" area interval, and by the absolute value of the difference between the central value of the "a" area and the nAPL value. Accordingly, the output signal OUT becomes y1(x) when the nAPL value is in the middle of the "a" area, and OUT becomes c $\times$ y1(x) by means of a normalized form of c=|p-q|/p <1 when the nAPL value is far from the middle of the "a" area. The characteristic curve of the expression (1) is shown as continuing into the "b" area of Figure 4. The characteristic of the expression (1) smoothly connects characteristics of the areas "a" and "b", together with an "S" characteristic of the "b" area. The input-output characteristic given by the expression (1) represents a general increase in variations from the left to right, the central value "d" of the "a" area is at the maximum in the variations of the input-output characteristic.

In area "b", since the nAPL value of the input signal is close to 0.5, the characteristic curve "S" contributes to the contrast enhancement. Thus, where the nAPL is around 0.5 the output signal OUT may be obtained by using the correction characteristic Y3(x) [referred to as expression (2)] but weighted according to the particular value of nAPL as follows:

$$OUT=amp \times |m-|nAPL-m|| \times y3(x) \tag{2}$$

where m is normally 0.5 and amp is an amplification ratio. The output signal in a further advanced form is adaptably calculated according to the nAPL value given by one of:

$$OUT_L=amp1 \times |m-|m-nAPL|| \times y3_L(x) \tag{3}$$

$$\text{OUT}_H = \text{amp2} \times |m - |nAPL - m|| \times y3_H(x) \tag{4}$$

where the nAPL is used to classify the video input signals into those having levels above and below "m", the third characteristic curve y3(x) being subdivided into functions $Y3_L(x)$ and $Y3_H(x)$ at either side of "m". In other words, when the input signal is below "m", expression (3) is applied and when the input signal is above "m", expression (4) is applied.

The weighted output function in the "c" area is obtained by the following expression (5) that is dependent on the second characteristic curve y2 weighted according to a particular value of nAPL-m:

$$\text{OUT} = \text{amp} \times |nAPL - m| \times y2(x) \tag{5}.$$

The input signal is corrected by the expressions of the corresponding area with the calculated nAPL value. In Figure 4, the reason why the characteristic curve within the "c" area exists in the "b" area is to make the characteristic variations between the "b" and "c" areas smooth. On the other hand, the brightness correction characteristics of the "a" area and the area in the rest can be calculated by

$$\text{OUT} = (0.5 - nAPL) \times y1(x) \tag{6}.$$

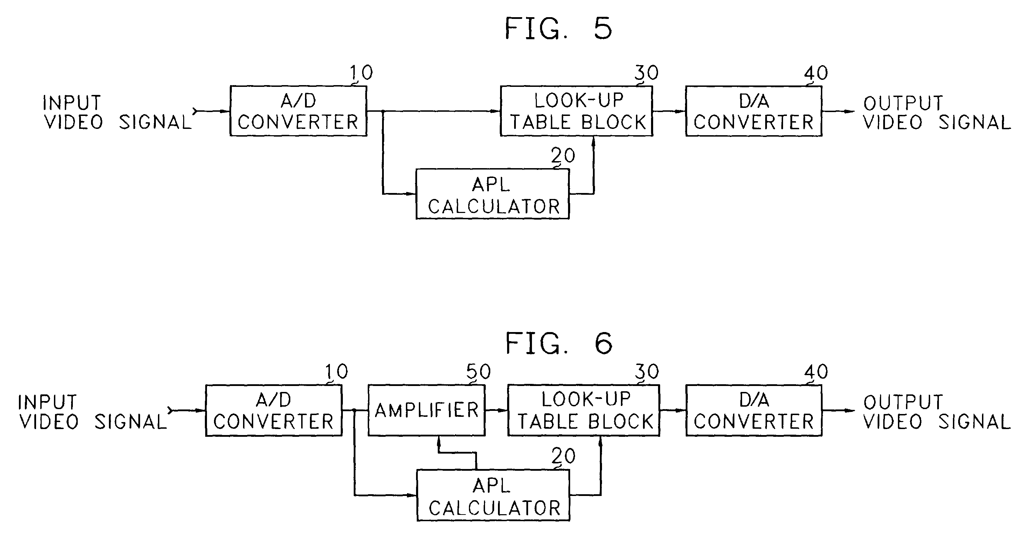

Figure 5 is a block diagram for illustrating a first embodiment of the image enhancement circuit in accordance with the present invention. As shown, an analog to digital converter 10 converts an analog video signal into a digital video signal, which is output to an average picture level (APL) calculator 20 and a look-up table block 30. The APL calculator 20 receives the video signal output from the A/D converter 10 and calculates a nAPL value. The look-up table block 30 corrects and outputs the output signal from the A/D converter 10 according to the output APL value from the APL calculator 20. The output signal of the look-up table block 30 is supplied to a digital to analog converter 40 and is converted into an analog video signal.

The video signal input to the image enhancement circuit of Figure 5 is converted into a digital signal by the A/D converter 10, and then the converted digital signal is supplied to the APL calculator 20 and the look-up table block 30, respectively. The APL calculator 20 calculates an nAPL value of the video input signal with respect to the real interval of a video signal during one frame period or a plurality of frame periods. At this time, the nAPL value is continuously reproduced for each input frame. The look-up table block 30 stores the brightness correction characteristics, which relate to the four areas in the form of a look-up table in which the video input signal is used as an address, and corrects and outputs the brightness of the video input signal according to the level of the video input signal and the corresponding nAPL value. Therefore, when the nAPL value is supplied from the APL calculator 20, the look-up table block 30 judges a corresponding area of the input value, and corrects and outputs the input digital video signal according to the brightness correction characteristic of the corresponding area. One of common skill in the art can construct the look-up table block 30 using many areas, or can employ various methods based on the expressions corresponding to each area.

The digital data read out from the look-up table block 30 is provided to the D/A converter 40, and is converted into an analog video signal. Here, the output video signal of the D/A converter 40 is corrected in brightness and contrast. In the circuit of Figure 5, although a frame with the calculated nAPL value is different from a frame that is actually input to the look-up table block 30, there is generally not any problem since video signals between adjacent frames are varied smoothly. However, in the case than an abrupt transition of the video signal, such as a scene change happens, or that brightness correction for the video signal of the calculated nAPL value may be performed, a delay element is connected between A/D converter 10 and look-up table block 30. The delay element delays the video signal output from the A/D converter 10 during the period in which the nAPL value is calculated.

Figure 6 is a block diagram for illustrating a second embodiment of an image enhancement circuit. Blocks of the image enhancement circuit of Figure 6 which have the same construction and function as in Figure 5 are designated with the same reference numerals. An amplifier 50 is further added between A/D converter 10 and look-up table block 30. The amplifier 50 amplifies the video signal output from the A/D converter 10 with a variable amplification ratio which is determined by the nAPL value provided from the APL calculator 20, and outputs the amplified signal to the look-up table block 30.

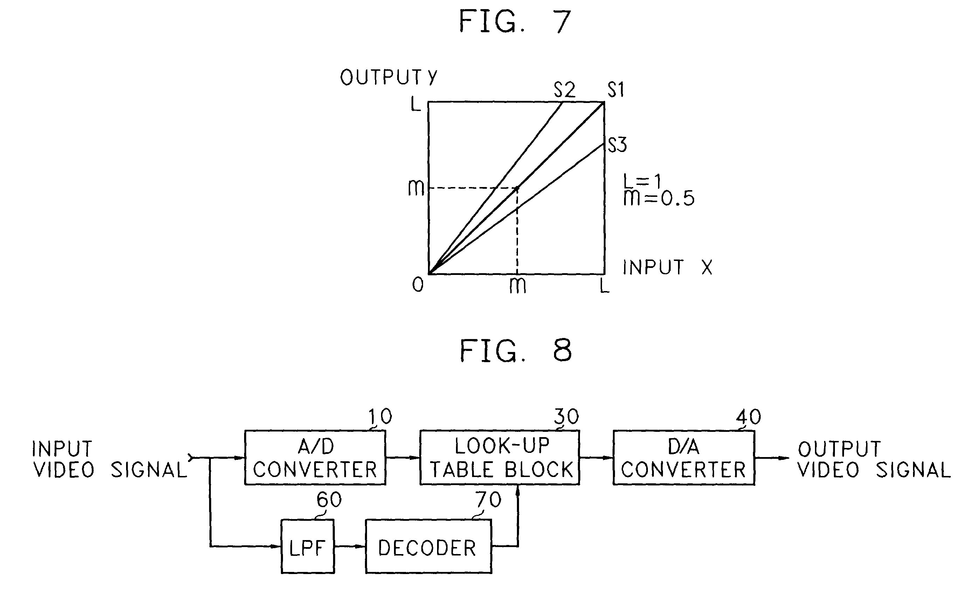

Figure 7 is a graph showing input-output characteristic curves by the amplifier 50. The amplifier 50 changes the amplification ratio of the video input signal into the direction "s3" when the nAPL value supplied from the APL calculator 20 is at or near "1", and it amplifies the video input signal into the direction "s2" if the nAPL value is not near "1". The intention is to control the level condition in a scene which is brightly lit and thereby to improve correction efficiency compared with the apparatus of Figure 5.

Figure 8 is a block diagram for illustrating a third embodiment of an image enhancement circuit in accordance with the present invention. Blocks of the image enhancement circuit of Figure 8 which have the same construction and function as in Figure 5 are designated with the same reference numerals. However, the APL calculator 20 of Figure 5 is substituted by a low-pass filter (LPF) 60 and a decoder 70. The LPF 60 calculates an approximate nAPL value in case that a time constant is composed of a great filter, and then roughly counts a value of portions not real pictures, such as a horizontal synchronizing period and a vertical blanking period, and subtracts the calculated value from the nAPL value, thereby providing the correction.

The LPF 60 calculates a nAPL value of the video input signal with respect to the real interval of a video signal during one frame period or a plurality of frame periods. The calculated nAPL value is output to the decoder 70 as voltage. The decoder 70 outputs a signal to control the look-up table block 30 by the voltage supplied from the LPF 60.

As described above, adaptive correction of the brightness is provided by individually permitting different input-output characteristics according to values of average brightness level of a video input signal, and thereby obtaining a contrast enhanced video signal. Even a dimly-lit picture may be naturally displayed by preventing an abrupt variation in brightness, and pictures enhanced in brightness and contrast are provided by adjusting only the contrast at a particular nAPL range. Furthermore, the correction efficiency of brightness and contrast is improved by means of controlling an amplification ratio of the video signal.

**Claims**

1. An image enhancement method adaptive to a scene which controls brightness and contrast of an input video signal using a normalized average brightness level, the method comprising the steps of:

    dividing the range of the normalized average brightness level (nAPL) in a video input signal into a plurality of areas according to efficiency of contrast enhancement, the areas being composed of a first area in which the average brightness level corresponds to a dark scene, a second area (b) of an intermediate average brightness level, a third area (a) with an average brightness level between that of said first and second areas and a fourth area (c) with an average brightness level above that of said second area;

    setting an individually different brightness correction characteristic to each of said divided areas, said first area having a normalized average brightness level around "0" and said second area (b) having a normalized average brightness level at or near "0.5";

    calculating the normalized average brightness level during a predetermined period with respect to a given particular video input signal; and

    controlling the brightness and contrast of the video input signal according to the brightness correction characteristic corresponding to said calculated normalized average brightness level, the method being characterised in that in said second area, where the normalized average brightness level is at or near 0.5, the level x of the video input signal is corrected using a correction characteristic Y3(x) where: $y3(x) = f(x^2)$ for values of input video signal where the normalized video input signal level is less than 0.5, and where $Y3(x)=g(x^{0.5})$ where the normalized video input signal level is greater than 0.5.

2. The image enhancement method as claimed in claim 1, wherein in said brightness and contrast controlling step the video input signal is output as it is, when the calculated normalized average brightness level is within said first area.

3. An image enhancement method as claimed in claim 1 or 2, in which the correction characteristic Y3(x) is weighted and corrected for the production of a corrected and weighted video signal in which the level x of the video input signal is corrected according to the expression OUT for contrast enhancement:

$$OUT = amp \times abs[m-abs(nAPL-m)] \times Y3(x)$$

    where amp is an amplification ratio, abs is an absolute value, nAPL is the normalized average brightness level value, and m is a constant.

4. An image enhancement method as claimed in claim 1 or 2, in which when the normalized average brightness level is in the second area, the correction characteristic Y3(x) is made up of two components $Y3_L(x)$ and $Y3_H(x)$, $Y3_L(x)$ being the correction characteristic $Y3(x)=f(x^2)$ which is applied to the input video signal when the normalized video input signal level is below 0.5 and $Y3_H(x)$ being the correction characteristic $Y3(x)=g(x^{0.5})$ applied when the normalized video input signal level is above 0.5, these two components further being weighted and corrected for the production of a corrected and weighted video signal in which the level "x" of the video input signal is corrected according to the following expressions $OUT_L$ and $OUT_H$ for contrast enhancement:

$$OUT_L = amp1 \times abs(m-abs(m-nAPL)) \times Y3_L(x);$$

$$OUT_H = amp2 \times abs(m-abs(nAPL-m)) \times Y3_H(x);$$

where each of said $OUT_L$ and $OUT_H$ is a corrected and weighted video signal, m is a constant, abs is an absolute value and, nAPL is the normalized average brightness level.

5. A method according to claim 3 or 4, wherein "m" is 0.5.

6. The image enhancement method as claimed in any of the preceding claims, wherein said brightness and contrast controlling step comprises the step of correcting said level of the video input signal level x by the following expression for contrast enhancement, in the case that the calculated normalized average brightness level is within said third area:

$$OUT = abs((p-q)/p) \times y1(x), \text{ where } y1(x) = \sqrt{x}$$

$$p = a\_area\text{-}period/2, \quad q = abs(a\_area\_center - nAPL)$$

where OUT is the corrected and weighted video signal, abs is the absolute value, "a_area-period" represents the internal period of the third area, "a_area_center" is the central value of the third area, and nAPL is the normalized average brightness level value.

7. The image enhancement method as claimed in claim 1, 3, 4 or 5, wherein said brightness and contrast controlling step comprises the step of correcting said level of the video input signal by the following expression for contrast enhancement, in the case that the calculated normalized average brightness level is within said third area:

$$OUT = (0.5 - nAPL) \times y1(x),$$

where $y1(x) = \sqrt{x}$, said OUT is the corrected and weighted video signal, and nAPL is the normalized average brightness level value.

8. The image enhancement method as claimed in any of the preceding claims, wherein said brightness and contrast controlling step comprises the step of correcting the video input signal level x by the following expression for contrast enhancement, in the case that the calculated normalized average brightness level is within said fourth area:

$$OUT = amp \times abs(nAPL-m) \times y2(x),$$

where $y2(x) = x^2$, said OUT is the corrected and weighted video signal, m is commonly 0.5, amp is an amplification ratio, abs is an absolute value, and nAPL is the normalized average brightness level value.

9. An image enhancement circuit adaptive to a scene which controls and outputs the brightness and contrast of a video signal using an average brightness level, the circuit being arranged to operate in accordance with the method of any of claims 1 to 8, the circuit comprising:

calculating means (20) for calculating the average brightness level during a predetermined period with respect to a video signal to be input through an input terminal; and

controlling means (30) for controlling the brightness and contrast of the video input signal according to brightness correction characteristics corresponding to said calculated average brightness level, in which the range of said average brightness level in said video input signal is divided into said plurality of areas, and a plurality of input-output characteristic curves are provided so that the brightness and contrast of said video input signal is differently corrected for respective areas.

10. The image enhancement circuit as claimed in claim 9, wherein said brightness and contrast controlling means (30) stores each of brightness correction characteristics corresponding to said average brightness level as format of a look-up table which is composed of a video output signal corresponding to a video input signal.

11. The image enhancement circuit as claimed in claim 9 or 10, wherein said brightness and contrast controlling means (30) corrects the brightness and contrast of a video signal to be input following the video input signal which is used in calculating of the average brightness level.

**12.** The image enhancement circuit as claimed in claim 9, 10 or 11, further comprising a delay unit, located before said brightness and contrast controlling means (30), for delaying and outputting the video input signal supplied through an input so that the brightness and contrast of the video input signal used in calculating of the average brightness level can be controlled.

**13.** The image enhancement circuit as claimed in any of claims 9 to 12, further comprising an amplifier (50) which amplifies said video input signal with an amplification ratio which is varied according to the average brightness level calculated by said average brightness level calculating means (20), and outputs the amplified signal to said brightness and contrast controlling means (30).

**14.** The image enhancement circuit as claimed in claim 13, wherein said amplifier (50) amplifies said video input signal so that the slope of an input-output characteristic curve becomes low, in the case that the calculated value of said average brightness level is near "1", while it amplifies said video input signal so that the slope of an input-output characteristic curve becomes high, in the case that the calculated value of said average brightness level is close to "0".

**15.** The image enhancement circuit as claimed in any of claims 9 to 14, wherein said average brightness level calculating means (20) comprises a low-pass filter (60) for counting the value of the average brightness level by passing through only low components of the video input signal, and then for outputting a corresponding voltage; and

a decoder (70) for outputting a control signal to control said brightness and contrast controlling means according to said voltage supplied from said low-pass filter.

**Patentansprüche**

**1.** Bildverbesserungsverfahren, das sich einer Aufnahme anpaßt und die Helligkeit und den Kontrast eines eingegebenen Videosignals unter Verwendung eines normalisierten durchschnittlichen Helligkeitspegels steuert, wobei das Verfahren folgende Schritte umfaßt:

Unterteilen des Bereichs des normalisierten durchschnittlichen Helligkeitspegels (nAPL) in einem Videoeingabesignal in eine Vielzahl von Bereichen in Übereinstimmung mit der Effizienz der Kontrastverbesserung, wobei die Bereiche einen ersten Bereich, in welchem der durchschnittliche Helligkeitspegel einer dunklen Aufnahme entspricht, einen zweiten Bereich (b) mit einem mittleren durchschnittlichen Helligkeitspegel, einen dritten Bereich (a) mit einem durchschnittlichen Helligkeitspegel zwischen denjenigen des ersten und des zweiten Bereichs sowie einen vierten Bereich (c) mit einem durchschnittlichen Helligkeitspegel über demjenigen des zweiten Bereichs umfassen,

Setzen einer jeweils unterschiedlichen Helligkeitskorrektur-Charakteristik für jeden der Teilbereiche, wobei der erste Bereich einen normalisierten durchschnittlichen Helligkeitspegel um „0" aufweist und der zweite Bereich (b) einen normalisierten durchschnittlichen Helligkeitspegel bei oder in der Nähe von „0,5" aufweist,

Berechnen des normalisierten durchschnittlichen Helligkeitspegels während einer vorbestimmten Zeitperiode in bezug auf ein bestimmtes Videoeingabesignal, und

Steuern der Helligkeit und des Kontrasts des Videoeingabesignals in Übereinstimmung mit der Helligkeitskorrektur-Charakteristik, die dem berechneten normalisierten durchschnittlichen Helligkeitspegel entspricht, wobei das Verfahren dadurch gekennzeichnet ist, daß in dem zweiten Bereich, wo der normalisierte durchschnittliche Helligkeitspegel bei oder in der Nähe von 0,5 ist, der Pegel x des Videoeingabesignals unter Verwendung einer Korrekturcharakteristik $Y3(x)$ korrigiert wird, wobei $y3(x) = f(x^2)$ für Werte des Eingabevideosignals, wo der normalisierte Videoeingabesignalpegel kleiner als 0,5 ist, und wobei $Y3(x) = g(x^{0.5})$, wo der normalisierte Videoeingabesignalpegel größer als 0,5 ist.

**2.** Bildverbesserungsverfahren nach Anspruch 1, wobei in dem Schritt zum Steuern der Helligkeit und des Kontrasts das Videoeingabesignal so wie es ist ausgegeben wird, wenn der berechnete normalisierte durchschnittliche Helligkeitspegel innerhalb des ersten Bereichs liegt.

3. Bildverbesserungsverfahren nach Anspruch 1 oder 2, wobei die Korrekturcharakteristik Y3(x) gewichtet und korrigiert wird, um ein korrigiertes und gewichtetes Videosignal zu erzeugen, in welchem der Pegel x des Videoeingabesignals in Übereinstimmung mit dem folgenden Ausdruck OUT für die Kontrastverbesserung korrigiert wird:

$$OUT = amp \ X \ abs \ [m - abs \ (nAPL - m)] \ X \ Y3(x)$$

wobei amp ein Verstärkungsverhältnis ist, abs ein absoluter Wert ist, nAPL der normalisierte durchschnittliche Helligkeitspegelwert ist und m eine Konstante ist.

4. Bildverbesserungsverfahren nach Anspruch 1 oder 2, wobei die Korrekturcharakteristik Y3(x) zwei Komponenten $Y3_L(x)$ und $Y3_H(x)$ umfaßt, wenn der normalisierte durchschnittliche Helligkeitspegel im zweiten Bereich ist, wobei $Y3_L(x)$ die Korrekturcharakteristik $Y3(x) = f(x^2)$ ist, welche auf das eingegebene Videosignal angewendet wird, wenn der normalisierte Videoeingabesignalpegel unter 0,5 ist, und $Y3_H(x)$ die Korrekturcharakteristik $Y3(x) = g(x^{0,5})$ ist, welche angewendet wird, wenn der normalisierte Videoeingabesignalpegel über 0,5 ist, wobei diese zwei Komponenten weiterhin gewichtet und korrigiert werden, um ein korrigiertes und gewichtetes Videosignal zu erzeugen, in welchem der Pegel „x" des Videoeingabesignals in Übereinstimmung mit den folgenden Ausdrücken $OUT_L$ und $OUT_H$ für die Kontrastverbesserung korrigiert wird:

$$OUT_L = amp1 \ X \ abs(m - abs \ (m - nAPL)) \ X \ Y3_L \ (x)$$

$$OUT_H = amp2 \ X \ abs(m - abs \ (nAPL - m)) \ X \ Y3_H \ (x)$$

wobei $OUT_L$ und $OUT_H$ jeweils korrigierte und gewichtete Videosignale sind, m eine Konstante ist, abs ein absoluter Wert ist und nAPL der normalisierte durchschnittliche Helligkeitspegel ist.

5. Verfahren nach Anspruch 3 oder 4, wobei „m" 0,5 ist.

6. Bildverbesserungsverfahren nach wenigstens einem der vorstehenden Ansprüche, wobei der Schritt zum Steuern der Helligkeit und des Kontrasts einen Schritt zum Korrigieren des Pegels des Videoeingabesignalpegels x durch den folgenden Ausdruck für die Kontrastverbesserung umfaßt, wenn der berechnete normalisierte durchschnittliche Helligkeitspegel innerhalb des dritten Bereichs ist:

$$OUT = abs \ ((p - q) \ /p) \ X \ y1 \ (x), \text{ wobei } y1(x) = \sqrt{\chi}$$

$$p = a\_area\_period \ / \ 2, \quad q = abs(a\_area\_center - nAPL)$$

wobei OUT das korrigierte und gewichtete Videosignal ist, abs der absolute Wert ist, „a_area-period" das Intervall des dritten Bereichs wiedergibt, „a_area_center" der zentrale Wert des dritten Bereichs ist und nAPL der normalisierte durchschnittliche Helligkeitspegelwert ist.

7. Bildverbesserungsverfahren nach Anspruch 1, 3, 4 oder 5, wobei der Schritt zum Steuern der Helligkeit und des Kontrasts einen Schritt zum Korrigieren des Pegels des Videoeingabesignals durch den folgenden Ausdruck für die Kontrastverbesserung umfaßt, wenn der berechnete normalisierte durchschnittliche Helligkeitspegel innerhalb des dritten Bereichs ist:

$$OUT = (0,5 - nAPL) \ X \ y1(x)$$

wobei $y1(x) = \sqrt{\chi}$ ist, OUT das korrigierte und gewichtete Videosignal ist und nAPL der normalisierte durchschnittliche Helligkeitspegelwert ist.

8. Bildverbesserungsverfahren nach wenigstens einem der vorstehenden Ansprüche, wobei der Schritt zum Steuern der Helligkeit und des Kontrasts einen Schritt zum Korrigieren des Videoeingabesignalpegels x durch den folgenden Ausdruck für die Kontrastverbesserung umfaßt, wenn der berechnete normalisierte durchschnittliche Helligkeitspegel innerhalb des vierten Bereichs ist:

$$OUT = amp \ X \ abs \ (nAPL - m) \ X \ y2(x)$$

wobei $y2(x) = x^2$, OUT das korrigierte und gewichtete Videosignal ist, m gleich 0,5 ist, amp ein Verstärkungsverhältnis ist, abs ein absoluter Wert ist und nAPL der normalisierte durchschnittliche Helligkeitspegelwert ist.

9.  Bildverbesserungsschaltung, die sich an eine Aufnahme anpaßt und die Helligkeit und den Kontrast eines Videosignals unter Verwendung eines durchschnittlichen Helligkeitspegels steuert und ausgibt, wobei die Schaltung angeordnet ist, um in Übereinstimmung mit dem Verfahren nach wenigstens einem der Ansprüche 1 bis 8 betrieben zu werden, wobei die Schaltung umfaßt;

    eine Berechnungseinrichtung (20) zum Berechnen des durchschnittlichen Helligkeitspegels während einer vorbestimmten Periode in bezug auf ein an einem Eingabeanschluß einzugebendes Videosignal, und

    eine Steuerschaltung (30) zum Steuern der Helligkeit und des Kontrasts des Videoeingabesignals in Übereinstimmung mit den Helligkeitskorrektur-Charakteristiken, die dem berechneten durchschnittlichen Helligkeitspegel entsprechen, wobei der Bereich des durchschnittlichen Helligkeitspegels in dem Videosignal in eine Vielzahl von Bereichen unterteilt wird und wobei eine Vielzahl von Eingabe/Ausgabe-Kennlinien vorgesehen sind, so daß die Helligkeit und der Kontrast des Videoeingabesignals in den entsprechenden Bereichen unterschiedlich korrigiert werden.

10.  Bildverbesserungsschaltung nach Anspruch 9, wobei die Helligkeit/Kontrast-Steuereinrichtung (30) jede der Helligkeitskorrektur-Charakteristiken in Übereinstimmung mit dem durchschnittlichen Helligkeitspegel in der Form einer Nachschlagetabelle speichert, die ein Videoausgabesignal in Entsprechung zu einem Videoeingabesignal umfaßt.

11.  Bildverbesserungsschaltung nach Anspruch 9 oder 10, wobei die Helligkeit/Kontrast-Steuereinrichtung (30) die Helligkeit und den Kontrast eines Videosignals korrigiert, das nach dem Videosignal einzugeben ist, welches zum Berechnen des durchschnittlichen Helligkeitspegels verwendet wird.

12.  Bildverbesserungsschaltung nach Anspruch 9, 10 oder 11, welche weiterhin eine Verzögerungsschaltung umfaßt, die vor der Helligkeit/Kontrast-Steuereinrichtung (30) angeordnet ist, um das an einem Eingang bereitgestellte Videosignal zu verzögern und auszugeben, so daß die Helligkeit und der Kontrast des für die Berechnung des durchschnittlichen Helligkeitspegels verwendeten Videoeingabesignals gesteuert werden können.

13.  Bildverbesserungsschaltung nach wenigstens einem der Ansprüche 9 bis 12, welche weiterhin einen Verstärker (50) umfaßt, der das Videoeingabesignal mit einem Verstärkungsverhältnis verstärkt, das in Übereinstimmung mit dem durch die Durchschnittlicher-Helligkeitspegel-Berechnungseinrichtung (20) berechneten durchschnittlichen Helligkeitspegel variiert wird, und das verstärkte Signal an die Helligkeit/Kontrast-Steuereinrichtung (30) ausgibt.

14.  Bildverbesserungsschaltung nach Anspruch 13, wobei der Verstärker (50) das Videoeingabesignal derart verstärkt, daß die Steigung einer Eingabe/Ausgabe-Kennlinie niedrig wird, wenn der berechnete Wert des durchschnittlichen Helligkeitspegels nahe „1" ist, während er das Videoeingabesignal derart verstärkt, daß die Steigung einer Eingabe/Ausgabe-Kennlinie hoch wird, wenn der berechnete Wert des durchschnittlichen Helligkeitspegels nahe „0" ist.

15.  Bildverbesserungsschaltung nach wenigstens einem der Ansprüche 9 bis 14, wobei die Durchschnittlicher-Helligkeitspegel-Berechnungseinrichtung (20) einen Tiefpaßfilter (60) zum Zählen des Wertes des durchschnittlichen Helligkeitspegels, indem er nur die niedrigen Komponenten des Videoeingabesignals durchläßt, und dann zum Ausgeben einer entsprechenden Spannung, und

    einen Decodierer (70) zum Ausgeben eines Steuersignals umfaßt, um die Helligkeit/Kontrast-Steuereinrichtung in Übereinstimmung mit der vom Tiefpaßfilter ausgegebenen Spannung zu steuern.

## Revendications

1.  Procédé d'amélioration d'image s'adaptant à une scène et qui commande la luminosité et le contraste d'un signal vidéo d'entrée en utilisant un niveau de luminosité moyen normalisé, le procédé comprenant les étapes consistant:

    à diviser la plage du niveau de luminosité moyen normalisé (nAPL) d'un signal vidéo d'entrée en une multiplicité de zones en fonction de l'efficacité de l'amélioration du contraste, les zones se composant d'une première zone dans laquelle le niveau de luminosité moyen correspond à une scène foncée, d'une seconde zone (b) d'un niveau de luminosité moyen intermédiaire, d'une troisième zone (a) ayant un niveau de luminosité moyen se situant entre celui de ladite première zone et celui de ladite seconde zone, et d'une quatrième zone (c) ayant un niveau de luminosité moyen supérieur à celui de ladite seconde zone ;

à établir une caractéristique de correction de luminosité individuelle différente pour chacune desdites zones divisées, ladite première zone ayant un niveau de luminosité moyen normalisé situé autour de 〈〈 0 〉〉 et ladite seconde zone (b) ayant un niveau de luminosité moyen normalisé égal ou proche de 〈〈 0,5 〉〉;

à calculer le niveau de luminosité moyen normalisé pendant une période de temps prédéterminée relativement à un signal vidéo d'entrée particulier donné ; et

à commander la luminosité et le contraste du signal vidéo d'entrée conformément à la caractéristique de correction de luminosité correspondant audit niveau de luminosité moyen normalisé calculé, le procédé étant caractérisé en ce que dans ladite seconde zone, dans laquelle le niveau de luminosité moyen normalisé est égal ou proche de 0,5, le niveau x du signal vidéo d'entrée est corrigé en utilisant une caractéristique de correction Y3(x) dans laquelle : $y3(x) = f(x^2)$ pour des valeurs du signal vidéo d'entrée pour lesquelles le niveau du signal d'entrée vidéo normalisé est inférieur à 0,5, et dans laquelle $Y3(x) = g(x^{0,5})$ lorsque le niveau du signal vidéo d'entrée normalisé est supérieur à 0,5.

2.  Procédé d'amélioration d'image selon la revendication 1, dans lequel, lors de ladite étape de commande de luminosité et de contraste, le signal vidéo d'entrée est délivré en sortie tel quel lorsque le niveau de luminosité moyen normalisé calculé se situe dans ladite première zone.

3.  Procédé d'amélioration d'image selon la revendication 1 ou la revendication 2, dans lequel la caractéristique de correction Y3(x) est pondérée et corrigée afin de produire un signal vidéo corrigé et pondéré dans lequel le niveau x du signal vidéo d'entrée est corrigé en fonction de l'expression OUT pour l'amélioration du contraste:

$$OUT = amp \ X \ abs[m-abs(nAPL-m)] \ X \ Y3(x)$$

expression dans laquelle amp désigne un rapport d'amplification, abs désigne une valeur absolue, nAPL désigne la valeur du niveau de luminosité moyen normalisé, et m est une constante.

4.  Procédé d'amélioration d'image selon la revendication 1 ou la revendication 2, dans lequel, lorsque le niveau de luminosité moyen normalisé se situe dans la seconde zone, la caractéristique de correction Y3(x) comprend deux composantes $Y3_L(x)$ et $Y3_H(x)$, $Y3_L(x)$ étant la caractéristique de correction $Y3(x)=f(x^2)$ qui est appliquée au signal vidéo d'entrée lorsque le niveau du signal d'entrée vidéo normalisé est inférieur à 0,5 et $Y3_H(x)$ étant la caractéristique de correction $Y3(x)=g(X^{0,5})$ appliquée lorsque le niveau du signal vidéo d'entrée normalisé est supérieur à 0,5, ces deux composantes étant en outre pondérées et corrigées afin de produire un signal vidéo corrigé et pondéré dans lequel le niveau 〈〈 x 〉〉 du signal vidéo d'entrée est corrigé en fonction des expressions suivantes $OUT_Z$ et $OUT_H$ pour l'amélioration du contraste :

$$OUT_Z = amp1 \ X \ abs(m-abs(m-nAPL)) \ X \ Y3_L(x) \ ;$$

$$OUT_H = amp2 \ X \ abs(m-abs(nAPL-m)) \ X \ Y3_H(x) \ ;$$

expressions dans lesquelles lesdits termes $OUT_L$ et $OUT_H$ désignent toutes deux un signal vidéo corrigé et pondéré, m est une constante, abs est une valeur absolue et nAPL est le niveau de luminosité moyen normalisé.

5.  Procédé selon la revendication 3 ou la revendication 4, dans lequel 〈〈 m 〉〉 est égal à 0,5.

6.  Procédé d'amélioration d'image selon l'une quelconque des revendications précédentes, dans lequel ladite étape de commande de luminosité et de contraste comprend l'étape consistant à corriger ledit niveau x du signal d'entrée vidéo à l'aide de l'expression suivante pour l'amélioration du contraste, dans le cas où le niveau de luminosité moyen normalisé calculé se situe dans ladite troisième zone :

$$OUT = abs((p-q)/p \ X \ y1(x), \ où \ y1(x) = \sqrt{x}$$

$$p = a\_area\text{-}period/2, \ q = abs(a\_area\_center\text{-}nAPL)$$

expression dans laquelle OUT représente le signal vidéo corrigé et pondéré, abs est la valeur absolue, 〈〈 a_area-period 〉〉 représente la période d'intervalle de la troisième zone, 〈〈 a_area_center 〉〉

est la valeur centrale de la troisième zone et nAPL est la valeur du niveau de luminosité moyen normalisé.

7. Procédé d'amélioration d'image selon la revendication1, 3, 4 ou 5, dans lequel ladite étape de commande de luminosité et de contraste comprend l'étape consistant à corriger ledit niveau du signal vidéo d'entrée à l'aide de l'expression suivante pour l'amélioration du contraste, dans le cas où le niveau de luminosité moyen normalisé calculé se situe dans ladite troisième zone :

$$OUT=(0,5\text{-}nAPL) \times y1(x),$$

expression dans laquelle $y1(x)=\sqrt{x}$ , ledit terme OUT représente le signal vidéo corrigé et pondéré, et nAPL est la valeur du niveau de luminosité moyen normalisé.

8. Procédé d'amélioration d'image selon l'une quelconque des revendications précédentes, dans lequel ladite étape de commande de luminosité et de contraste comprend l'étape consistant à corriger le niveau x du signal vidéo d'entrée à l'aide de l'expression suivante pour l'amélioration du contraste, dans le cas où le niveau de luminosité moyen normalisé calculé se situe dans ladite quatrième zone :

$$OUT=amp \times abs(nAPL\text{-}m) \times y2(x),$$

expression dans laquelle $y2(x)=x^2$ , ledit terme OUT désigne le signal vidéo corrigé et pondéré, m est normalement égal à 0,5, amp est un rapport d'amplification, abs est une valeur absolue et nAPL est la valeur du niveau de luminosité moyen normalisé.

9. Circuit d'amélioration d'image s'adaptant à une scène et qui commande et délivre en sortie la luminosité et le contraste d'un signal vidéo en utilisant un niveau de luminosité moyen, le circuit étant conçu pour fonctionner conformément au procédé de l'une quelconque des revendications 1 à 8, le circuit comprenant :

des moyens de calcul (20) pour calculer le niveau de luminosité moyen pendant une période prédéterminée relativement à un signal vidéo devant être appliqué en entrée par l'intermédiaire d'une borne d'entrée ; et des moyens de commande (30) pour commander la luminosité et le contraste du signal vidéo d'entrée conformément aux caractéristiques de correction de luminosité correspondant audit niveau de luminosité moyen calculé, dans lequel la plage dudit niveau de luminosité moyen dans ledit signal vidéo d'entrée est divisée en ladite multiplicité de zones, et une multiplicité de courbes caractéristiques d'entrée-sortie sont fournies de manière à ce que la luminosité et le contraste dudit signal vidéo d'entrée soient corrigés de façon différente pour les zones respectives.

10. Circuit d'amélioration d'image selon la revendication 9, dans lequel lesdits moyens de commande de luminosité et de contraste (30) stockent chacune des caractéristiques de correction de luminosité correspondant audit niveau de luminosité moyen sous la forme d'une table à consulter qui se compose d'un signal vidéo de sortie correspondant à un signal vidéo d'entrée.

11. Circuit d'amélioration d'image selon la revendication 9 ou la revendication 10, dans lequel lesdits moyens de commande de luminosité et de contraste (30) corrigent la luminosité et le contraste d'un signal vidéo devant être appliqué en entrée après le signal vidéo d'entrée qui est utilisé pour calculer le niveau de luminosité moyen.

12. Circuit d'amélioration d'image selon la revendication 9, 10 ou 11, comprenant, en outre, un dispositif à retard, situé avant lesdits moyens de commande de luminosité et de contraste (30), servant à retarder et délivrer en sortie le signal vidéo d'entrée fourni par l'intermédiaire d'une entrée de façon à ce que la luminosité et le contraste du signal vidéo d'entrée utilisé pour calculer le niveau de luminosité moyen puissent être commandés.

13. Circuit d'amélioration d'image selon l'une quelconque des revendications 9 à 12, comprenant, en outre, un amplificateur (50) qui amplifie ledit signal vidéo d'entrée en utilisant un rapport d'amplification qui est amené à varier en fonction du niveau de luminosité moyen calculé par lesdits moyens de calcul de niveau de luminosité moyen (20), et envoie le signal amplifié auxdits moyens de commande de luminosité et de contraste (30).

14. Circuit d'amélioration d'image selon la revendication 13, dans lequel ledit amplificateur (50) amplifie ledit signal vidéo d'entrée de façon à ce que la pente d'une courbe caractéristique d'entrée-sortie s'adoucisse dans le cas où la valeur calculée dudit niveau de luminosité moyen est proche de 〈〈 1 〉〉, tandis qu'il amplifie ledit signal vidéo d'entrée de telle sorte que la pente d'une courbe caractéristique d'entrée-sortie s'accentue dans le cas où la valeur calculée dudit niveau de luminosité moyen est proche de ⟨⟨ 0 ⟩⟩.

**15.** Circuit d'amélioration d'image selon l'une quelconque des revendications 9 à 14, dans lequel lesdits moyens de calcul de niveau de luminosité moyen (20) comprennent un filtre passe-bas (60) pour compter la valeur du niveau de luminosité moyen en ne laissant passer que les composantes basse fréquence du signal vidéo d'entrée, et pour délivrer ensuite en sortie une tension correspondante ; et

un décodeur (70) pour délivrer en sortie un signal de commande afin de commander lesdits moyens de commande de luminosité et de contraste conformément à ladite tension fournie par ledit filtre passe-bas.

EP 0 654 943 B1

FIG. 1 (PRIOR ART)

OUTPUT Y

FIG. 2 (PRIOR ART)

15

# FIG. 3

OUTPUT Y

# FIG. 4

# FIG. 5

INPUT VIDEO SIGNAL → | A/D CONVERTER (10) | → | LOOK-UP TABLE BLOCK (30) | → | D/A CONVERTER (40) | → OUTPUT VIDEO SIGNAL

| APL CALCULATOR (20) |

# FIG. 6

INPUT VIDEO SIGNAL → | A/D CONVERTER (10) | → | AMPLIFIER (50) | → | LOOK-UP TABLE BLOCK (30) | → | D/A CONVERTER (40) | → OUTPUT VIDEO SIGNAL

| APL CALCULATOR (20) |

EP 0 654 943 B1

# FIG. 7

OUTPUT Y

S2    S1

L

S3

m

L=1
m=0.5

O          m          L

INPUT X

EP 0 654 943 B1

# FIG. 8

INPUT
VIDEO SIGNAL

| A/D CONVERTER 10 | LOOK-UP TABLE BLOCK 30 | D/A CONVERTER 40 |

OUTPUT
VIDEO SIGNAL

| LPF 60 | DECODER 70 |